# FASCICULE DE BREVET EUROPEEN

(11) **EP 0 498 734 B1**
(45) Date de publication et mention de la délivrance du brevet: **28.06.1995**
(21) Numéro de dépôt: 92400324.7
(22) Date de dépôt: 07.02.1992
(51) Int. Cl.: H04M 1/68, H04M 1/66, H04M 1/00, H04M 1/70

(54) **Dispositif pour la détection d'un branchement non autorisé sur une ligne téléphonique d'abonné**
Vorrichtung zum Feststellen eines unbefugten Zugriffes auf eine Fernsprechteilnahmerleitung
Wire tap detection device on a telephone subscriber line

(30) Priorité: 08.02.1991 FR 9101486
(43) Date de publication de la demande: 12.08.1992
(73) Titulaire: FRANCE TELECOM, 75015 Paris (FR)
(72) Inventeur: Corneux, Michel, F-52000 Chaumont (FR)
(74) Mandataire: Armengaud Ainé, Alain

(56) Documents cités:
- EP-A- 0 268 717
- EP-A- 0 454 262
- GB-A- 2 205 216
- GB-A- 2 206 467
- US-A- 4 969 178

## Description

La présente invention est relative à un dispositif permettant à un abonné au réseau téléphonique de s'assurer que sa ligne n'a fait l'objet d'aucun branchement frauduleux ou accidentel, permanent ou occasionnel, conduisant notamment à une facturation des communications attribuées à cette ligne ne correspondant pas à son utilisation personnelle effective.

On sait que les lignes téléphoniques d'abonnés privés sont distribuées à partir du réseau via des réglettes de répartition, centralisées par immeuble ou, en amont, dans des postes de distribution, répartis par secteurs urbains ou géographiques déterminés. On peut donc imaginer que par un simple branchement sur les deux fils d'amenée d'une ligne, en un endroit quelconque de celle-ci notamment sur une des réglettes de répartition, il soit possible de dériver la ligne vers un poste d'appel différent, pouvant dès lors utiliser cette dernière de façon frauduleuse, en tout cas non autorisée. De même, lors de travaux effectués sur les lignes du réseau par des entreprises spécialisées, il est toujours possible qu'un employé indélicat utilise indûment une ligne quelconque du réseau, soit plutôt qu'un branchement anormal produise en pratique le même effet.

La présente invention vise donc à permettre aux abonnés de contrôler eux-mêmes que leur ligne ne fait pas ou n'a pas fait l'objet d'un branchement de ce genre, en évitant des contestations éventuelles dont, en l'état actuel des installations, il est difficile de s'assurer qu'elles sont ou non bien fondées, ceci au moyen d'un dispositif de surveillance permanente, qui soit simple, peu onéreux et fiable, susceptible de détecter instantanément tout branchement clandestin éventuel et également d'acquérir la certitude qu'il n'y a pas eu un tel branchement, même temporaire, entre deux contrôles.

L'état de la technique, par exemple la demande américaine US-A-4 969 178 divulgue un dispositif comportant un détecteur de courant de ligne et un contrôleur de la tension entre les deux fils de la ligne, montés dans un circuit de contrôle et d'enregistrement agencé de telle sorte que la détection simultanée d'une absence de courant dans la ligne et d'une chute de tension, conséquence d'une anomalie correspondant notamment à un branchement direct avec isolement de la ligne ou en parallèle sur la ligne, soit immédiatement perceptible. Le dispositif est cependant à détection instantanée et ne permet pas de différencier les parasites se produisant en situation normale, d'un branchement frauduleux. Pour livrer cette ambigüité, le dispositif suivant l'invention se caractérise en ce qu'il comporte également un circuit de temporisation, en série avec le circuit de contrôle et d'enregistrement, de telle sorte que l'anomalie détectée ne soit prise en compte qu'au-delà d'un seuil de durée minimale. Ce seuil est réglable et fixé, dans un mode de réalisation préféré de l'invention, à 30 secondes.

Lorsque la ligne est au repos, aucun courant ne circule dans celle-ci, la tension entre ses deux fils étant la tension nominale distribuée sur le réseau téléphonique, usuellement comprise entre 45 et 60 v continus selon la distance de la ligne vis-à-vis du central de commutation. Quand la ligne est en phase de réception d'un appel, c'est-à-dire lorsqu'elle devient le siège d'un courant et d'une tension alternative d'environ 80 v, réalisant l'actionnement de la sonnerie d'appel, aucune chute de la tension continue entre les fils ne se produit, celle-ci restant donc à sa valeur nominale précitée. En outre, le dispositif permet d'éviter toute détection parasite, due à des circonstances en pratique normales, par exemple à une boucle accidentelle réalisée par un outil en cas d'intervention technique sur la ligne.

En revanche, lorsque l'abonné, pour prendre un appel sur son poste ou, à partir de celui-ci, compose la numérotation d'un autre abonné, après avoir décroché son récepteur, il se produit une chute de la tension continue entre les deux fils de la ligne, passant à une valeur généralement inférieure à 40 v, cette chute de tension, due à la mise en circuit de l'appareil téléphonique, s'accompagnant du passage dans la ligne d'un courant, de l'ordre habituellement de 35 mA.

On comprend ainsi que, grâce à la présence du détecteur de courant et du contrôleur de tension, tout signal correspondant à une chute de tension relevée en l'absence simultanée d'un courant dans la ligne, soit représentatif d'une anomalie et signifie que la ligne est utilisée en amont du poste d'abonné, du fait le cas échéant d'un isolement ou d'un bouclage accidentel, plus couramment en raison d'un branchement non autorisé, voire frauduleux.

Au contraire, l'absence d'anomalie permet de prouver de façon formelle qu'il n'y a eu ni travaux sur la ligne, ni utilisation non autorisée de celle-ci, rendant dès lors certain que les communications facturées ont bien été émises à partir de l'installation de l'abonné (comprenant un ou plusieurs postes).

Par ailleurs et selon une autre caractéristique du dispositif considéré, le circuit de contrôle et d'enregistrement n'est susceptible de prendre en compte des anomalies successives, que dans la mesure où elles sont séparées par au moins un intervalle de temps donné, supérieur à une seconde, afin notamment d'éviter de retenir, pour caractériser une telle anomalie, chacun des top de numérotation lors d'un appel réalisé à partir du poste de l'abonné lui-même, préalablement à l'établissement de la sonnerie puis de la communication, et à la création d'un courant dans la ligne.

Dans un mode de réalisation particulier du dispositif, le détecteur de courant de ligne comporte un jeu de deux photocoupleurs, dont les entrées sont réunies à deux diodes montées en anti-parallèle et les sorties sont disposées en parallèle, de sorte que la conduction de l'une ou l'autre de ces diodes soit provoquée par le courant dans la ligne, quel que soit le sens de celui-ci. Avantageusement, un condensateur est monté en parallèle sur les photocoupleurs afin de limiter la valeur du courant de sonnerie dans les diodes, tout en permettant le passage dans la ligne des signaux de conversation et de sonnerie, sans les affaiblir.

Selon une autre caractéristique mise en oeuvre dans le même mode de réalisation, le contrôleur de la tension entre les deux fils de la ligne, comporte un pont de redresseurs, dont la tension d'entrée est la tension de la ligne, la tension de sortie alimentant la grille d'un transistor à effet de champ de telle sorte qu'en cas de chute de la tension dans la ligne, la tension à la grille du transistor diminue, rendant celui-ci conducteur de façon à alimenter la diode d'entrée d'un photocoupleur.

Selon encore une autre caractéristique, le dispositif comporte un circuit de contrôle instantané d'anomalies, comprenant deux portes NOR, réunies respectivement à la sortie commune des photocoupleurs du détecteur de courant de ligne et à la sortie du photocoupleur du contrôleur de tension, de manière à produire un signal de commande, en l'absence de courant et en présence d'une chute de tension.

Le signal de commande issu du circuit de contrôle instantané d'anomalies est alors reçu par un circuit de temporisation, comportant une cellule RC, dont la sortie est adressée à un circuit d'enregistrement, comportant un compteur incrémentant les anomalies successives détectées et un afficheur, associés à une bascule permettant de mémoriser la présence d'au moins une anomalie, et à une alarme déclenchée en cas de répétitions des anomalies enregistrées.

D'autres caractéristiques du dispositif considéré, pour le contrôle de l'état d'une ligne téléphonique, notamment pour détecter tout branchement non autorisé sur celle-ci, apparaîtront encore à travers la description qui suit d'un exemple de réalisation, donné à titre indicatif et non limitatif, en référence aux dessins annexés sur lesquels :
- La Figure 1 est un schéma simplifié, illustrant le raccordement d'une ligne téléphonique à un poste d'abonné ainsi que le montage d'un détecteur de courant et d'un contrôleur de tension selon l'invention, respectivement en série et en parallèle avec la ligne.
- La Figure 2 est un schéma plus détaillé, illustrant le montage des différentes parties du dispositif, notamment des circuits utilisés pour traiter les signaux issus respectivement du détecteur et du contrôleur.
- La Figure 3 illustre en détail un mode de réalisation particulier, du dispositif considéré.

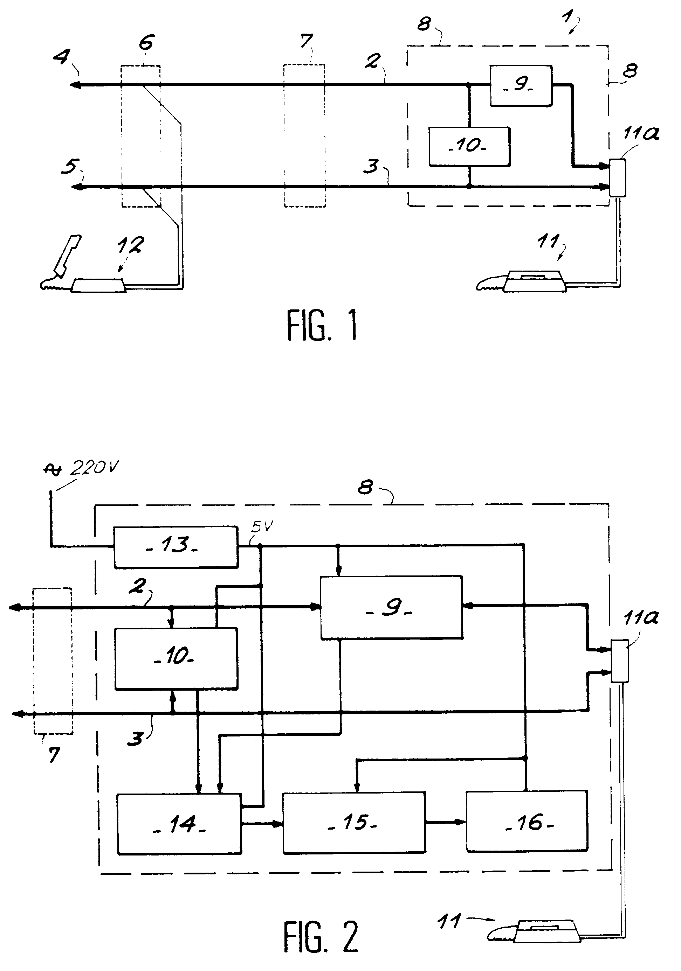

Sur la Figure 1, la référence 1 désigne de façon très schématique une installation d'abonné à laquelle aboutissent les deux fils, respectivement 2 et 3 d'une ligne téléphonique, ceux-ci se prolongeant par leurs extrémités 4 et 5 jusqu'à un central de commutation (non représenté). Sur les fils de la ligne, sont disposées, de façon classique, des réglettes de raccordement telles que 6 et 7, par exemple au niveau de l'immeuble ou du groupement de lignes comprenant celle de l'abonné considéré, ou encore à partir de laquelle, est tirée la ligne personnelle de celui-ci.

Conformément à l'invention, l'installation 1 est munie d'un dispositif de contrôle, désigné dans son ensemble sous la référence 8, comportant en particulier un détecteur de courant de ligne 9 monté en série sur l'un des fils de cette ligne et un contrôleur 10 de la valeur de la tension continue entre les fils 2 et 3, ces derniers étant réunis à un combiné téléphonique usuel 11 par l'intermédiaire d'un conjoncteur de raccordement 11a.

Le dispositif 8 permet notamment de savoir si des travaux ont eu lieu sur la ligne considérée, ayant pu momentanément boucler ou isoler celle-ci, ou bien plus encore si s'est produit ou subsiste encore un branchement parallèle parasite ou frauduleux, au niveau d'une réglette de raccordement quelconque, voire en amont du dispositif, en un endroit quelconque de la ligne, comme le schématise le montage représenté d'un poste 12 connecté par exemple sur la réglette 6.

La Figure 2 donne avec plus de détails le schéma synoptique du dispositif de détection et de contrôle 8 associé à la ligne considérée. Sur cette Figure on retrouve les fils 2 et 3 de la ligne, la réglette de raccordement 7 de cette dernière et le poste d'appel ou de réception 11 avec son conjoncteur 11a. On retrouve également le détecteur 9 et le contrôleur 10, respectivement en série et en parallèle sur la ligne. L'ensemble comporte par ailleurs un circuit d'alimentation 13, raccordé d'une part au secteur de distribution du courant électrique, généralement à 220 volts alternatifs et délivrant à sa sortie une tension continue, filtrée et régulée, notamment égale à 5 volts dans l'exemple de réalisation considérée. Cette tension alimente respectivement le détecteur 9 et le contrôleur 10 ainsi que d'autres circuits complémentaires, permettant de traiter les signaux fournis par ceux-ci, à savoir un détecteur d'anomalie instantanée 14, un temporisateur 15 et un compteur afficheur d'anomalies 16, montés en série.

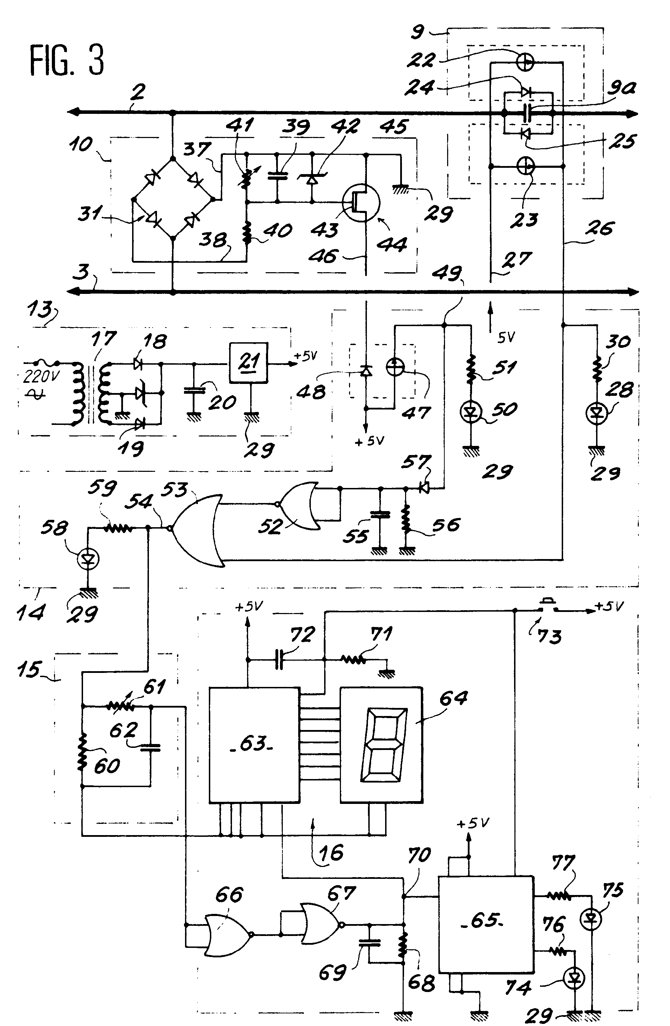

La Figure 3 représente un mode de réalisation particulier du dispositif de détection et de contrôle 8 et des divers circuits qu'il comporte.

Le circuit d'alimentation 13 comprend ainsi un transformateur à basse tension 17, alimenté par le secteur à 220 volts et délivrant à sa sortie une tension de 5 volts, redressée au moyen de deux diodes 18 et 19 en opposition, puis filtrée au moyen d'un condensateur 20 et régulée en 21, pour délivrer en sortie une tension continue stable de 5 volts.

Le détecteur de courant de ligne 9 comporte deux phototransistors 22 et 23, dont les diodes d'entrée 24 et 25 sont disposées dans un montage anti-parallèle, avec leurs sorties en parallèle, de sorte que la conduction de l'une ou l'autre de ces diodes se produise quel que soit le sens du courant dans la ligne. La sortie 26 du montage est réunie à l'entrée du détecteur d'anomalie 14 de la manière indiquée plus loin, tandis que son entrée 27 est raccordée à la sortie du circuit d'alimentation 13 et ainsi portée au potentiel de 5 volts. Une diode électroluminescente 28 est montée entre la masse 29 et la sortie 26 du détecteur 9 par l'intermédiaire d'une résistance 30, s'allumant lorsque passe un courant dans la ligne et en jouant le rôle de témoin lumineux. Avantageusement est diposé sur la ligne entre les diodes 24 et 25 un condensateur 9a afin de limiter la valeur du courant de sonnerie dans ces diodes, tout en permettant le passage dans la ligne des signaux de conversation émis ou reçus par l'abonné, sans les affaiblir.

Le contrôleur de tension 10 monté entre les fils 2 et 3 de la ligne, comporte principalement un pont redresseur 31 dont les sorties 37 et 38 sont réunies par un diviseur de tension, comportant notamment un condensateur 39 et une résistance 40, une résistance variable 41 permettant d'ajuster la valeur de la tension fournie pour obtenir une détection fiable, quelles que soient les caractéristiques et la valeur de la tension entre les deux fils de la ligne. Une diode Zener 42 limite la tension de grille, tandis que le condensateur 39 en parallèle limite tout risque d'impulsion parasite.

La tension à la sortie du montage ainsi réalisé est appliquée à la grille 43 d'un transistor à effet de champ 44 dont la source 45 est raccordée à la masse 29, tandis que le drain 46 est réuni à un phototransistor 47 par l'intermédiaire de la diode d'entrée 48 de ce dernier, elle-même raccordée à la sortie du circuit d'alimentation et portée en conséquence à la tension de 5 volts. La présence d'un signal sur la sortie 49 du photransistor 47 est détectée par une seconde diode électroluminescente 50 par l'intermédiaire d'une résistance 51, ce signal étant acheminé avec celui recueilli à la sortie 26 du détecteur 9 à une seconde entrée du détecteur d'anomalie instantanée 14.

Le détecteur 14 comporte deux portes NOR, respectivement 52 et 53, montées de telle sorte qu'il fournisse sur sa sortie 54 un signal lorsqu'il constate une tension sur la sortie 49 du contrôleur 10, alors qu'aucun signal n'est en revanche présent sur la sortie 26 du détecteur de courant de ligne 9. Une cellule comportant un condensateur 55 et une résistance 56, associée à une diode 57, permet au circuit détecteur 14 de ne prendre en compte que des impulsions d'une durée minimale déterminée, d'au moins une seconde dans l'exemple considéré, afin de ne pas prendre pour un branchement non autorisé, un bouclage accidentel et très bref entre les deux fils de la ligne, pouvant résulter d'une manoeuvre intempestive, par exemple lors de travaux effectués sur cette ligne. Une troisième diode électroluminescente 58 est montée en parallèle sur la sortie du détecteur d'anomalie entre la masse 29 et une résistance 59, cette diode permettant ainsi de repérer visuellement que les conditions correspondant à la présence d'une telle anomalie ont été remplies.

Le signal fourni à la sortie 54 du détecteur 14 est acheminé vers le temporisateur 15, celui-ci étant essentiellement constitué d'une résistance 60 en parallèle sur une résistance variable 61 et un condensateur 62, de telle sorte que la cellule R-C ainsi constituée ne transmette au compteur 16 que des signaux correspondants à des anomalies détectées d'une durée supérieure à un seuil déterminé, fixé à 30 secondes dans l'exemple considéré, cette durée étant ajustable par la résistance variable 61. Une décharge rapide du condensateur est assurée par la résistance 60 lors de la disparition de l'anomalie repérée par le détecteur 14.

Le compteur afficheur 16 comprend essentiellement un circuit d'incrémentation 63 sur lequel est monté en parallèle un afficheur à diodes 64, susceptible d'indiquer le nombre d'anomalies successives enregistrées, par exemple jusquà 9. Une bascule 65 permet par ailleurs de mémoriser s'il y a eu ou non une anomalie au moins. Deux portes NOR en cascade, respectivement 66 et 67, associées en sortie à une cellule comportant une résistance 68 et un condensateur 69 permettent une remise en forme du signal provenant du temporisateur et délivré à la sortie 70 de cette cellule au circuit de comptage 63 et à la bascule 65 respectivement.

Le circuit de comptage 63 et la bascule 65 comportent par ailleurs un dispositif commun de remise à zéro comporte par ailleurs un dispositif de remise à zéro lors de sa mise sous tension, comportant une résistance 71 et un condensateur 72. Une remise à zéro manuelle peut également être prévue au moyen d'un bouton poussoir 73.

La bascule 65 est enfin associée à deux nouvelles diodes électroluminescentes en parallèle, respectivement 74 et 75, montées entre la masse 29 et des résistances 76 et 77, la première de ces diodes 74 étant allumée en permanence pour signaler l'état normal de la ligne, la seconde diode 75 s'allumant et clignotant lors de la détection d'une anomalie.

On réalise ainsi un dispositif permettant d'assurer la détection et le contrôle de tout branchement non autorisé, d'une durée minimale appropriée, sur la ligne d'un abonné, le contrôle de l'état du dispositif pouvant être effectué immédiatement en fonction de celui des différentes diodes électroluminescentes de contrôle, jouant le rôle de témoins facultatifs, soit de l'état normal de la ligne, soit de la présence d'une anomalie au moins, le nombre successif de ces dernières pouvant être apprécié par l'afficheur. Les autres témoins permettent de contrôler le bon fonctionnement des autres parties du dispositif, notamment du détecteur de courant de ligne, du contrôleur de tension et de la détection instantanée d'une anomalie.

Le dispositif peut être aisément réalisé à l'intérieur d'un boîtier de faibles dimensions, pouvant être facilement raccordé à la ligne, en particulier au moyen d'une prise gigogne classique au niveau du conjoncteur de l'installation dans le cas où celle-ci ne comporte qu'une seule prise et un seul poste. L'entretien d'un tel appareil est pratiquement inexistant, son coût pouvant être par ailleurs relativement minime.

Bien entendu, il va de soi que l'invention ne se limite pas à l'exemple de réalisation décrit et représenté ; elle en embrasse au contraire toutes les variantes.

## Revendications

1. Dispositif pour la détection d'un branchement non autorisé sur une ligne téléphonique d'abonné, comportant un détecteur de courant de ligne (9) et un contrôleur de la tension (10) entre les deux fils (2,3) de la ligne, montés dans un circuit de contrôle et d'enregistrement (8), agencé de telle sorte que la détection simultanée d'une absence de courant dans la ligne et d'une chute de tension, conséquence d'une anomalie correspondant notamment à un branchement direct avec isolement de la ligne, ou en parallèle sur la ligne, soit immédiatement perceptible, caractérisé en ce qu'il comporte également un circuit de temporisation (14), en série avec le circuit de contrôle et d'enregistrement (8), de telle sorte que l'anomalie détectée ne soit prise en compte qu'au-delà d'un seuil de durée minimale.

2. Dispositif selon la revendication 1, caractérisé en ce que le seuil réglable est ajusté au moyen d'une résistance variable (61) en série avec un condensateur (62).

3. Dispositif selon la revendication 2, caractérisé en ce que la durée du seuil est fixée à 30 secondes.

4. Dispositif selon l'une quelconque des revendications 1 à 3, caractérisé en ce que le circuit de contrôle et d'enregistrement (8) n'est susceptible de prendre en compte des anomalies successives, que dans la mesure où elles sont séparées par au moins un intervalle de temps donné, ajusté au moyen d'une cellule résistance (56) - capacité (55).

5. Dispositif selon la revendication 4, caractérisé en ce que l'intervalle de temps est au moins égal à une seconde.

6. Dispositif selon la revendication 1, caractérisé en ce que le détecteur de courant de ligne (9) comporte un jeu de deux photocoupleurs (22,23), dont les entrées sont réunies à deux diodes (24,25) montées en anti-parallèle et dont les sorties sont disposées en parallèle, de sorte que la conduction de l'une ou l'autre de ces diodes soit provoquée par le courant dans la ligne, quel que soit le sens de celui-ci.

7. Dispositif selon la revendication 6, caractérisé en ce qu'un condensateur (9a) est monté en parallèle sur les photocoupleurs afin de limiter la valeur du courant de sonnerie dans les diodes, tout en permettant le passage dans la ligne des signaux de conversation et de sonnerie, sans les affaiblir.

8. Dispositif selon la revendication 1, caractérisé en ce que le contrôleur de tension (10) entre les deux fils de la ligne, comporte un pont de redresseurs (31), dont la tension d'entrée est la tension de la ligne, la tension de sortie alimentant la grille (43) d'un transistor à effet de champ (44) de telle sorte qu'en cas de chute de la tension dans la ligne, la tension à la grille du transistor diminue, rendant celui-ci conducteur de façon à alimenter la diode d'entrée (48) d'un photocoupleur (47).

9. Dispositif selon la revendication 1, caractérisé en ce qu'il comporte un circuit de contrôle instantané d'anomalies (14), comprenant deux portes NOR (52,53), réunies respectivement à la sortie commune des photocoupleurs (22,23) du détecteur de courant de ligne (9) et à la sortie du photocoupleur (47) du contrôleur de tension (10), de manière à produire un signal de commande, en l'absence de courant et en présence d'une chute de tension.

10. Dispositif selon la revendication 9, caractérisé en ce que le signal issu du circuit de contrôle instantané d'anomalies (14) est reçu par un circuit d'enregistrement (16), comportant un compteur (63) incrémentant les anomalies successives détectées et un afficheur (64), associés à une bascule (65) permettant de mémoriser la présence d'au moins une anomalie, et à une alarme déclenchée en cas de répétitions des anomalies enregistrées.

## Patentansprüche

1. Vorrichtung zum Feststellen eines unbefugten Zugriffs auf eine Fernsprechteilnehmerleitung mit einem Netzstromdetektor (9) und einem Spannungssteuerschalter (10) zwischen den beiden Drähten (2, 3) der Leitung, die in einer Kontroll- und Aufzeichnungsschaltung (8) angebracht sind, die derart angeordnet ist, daß die gleichzeitige Erfassung einer Abwesenheit von Strom in der Leitung sowie eines Spannungsabfalls infolge einer Unregelmäßigkeit, die insbesondere einem direkten Zugriff bei Isolierung der Leitung oder parallel zur Leitung entspricht, unmittelbar wahrnehmbar ist, dadurch gekennzeichnet, daß sie auch eine Verzögerungsschaltung (14) in Reihe mit der Kontroll- und Aufzeichnungsschaltung (8) aufweist, so daß die erfaßte Unregelmäßigkeit nur jenseits eines Schwellenwerts einer Mindestdauer berücksichtigt wird.

2. Vorrichtung nach Anspruch 1, dadurch gekennzeichnet, daß der zu regelnde Schwellenwert mittels eines variablen Widerstandes (61) in Reihe mit einem Kondensator (62) eingestellt wird.

3. Vorrichtung nach Anspruch 2, dadurch gekennzeichnet, daß die Dauer des Schwellenwerts auf 30 Sekunden festgelegt ist.

4. Vorrichtung nach einem der Ansprüche 1 bis 3, dadurch gekennzeichnet, daß die Kontroll- und Aufzeichnungsschaltung (8) nur aufeinanderfolgende Unregelmäßigkeiten berücksichtigen kann, soweit sie durch wenigstens ein gegebenes Zeitintervall getrennt sind, das mittels einer Zelle aus Widerstand (56)-Kapazität (55) eingestellt wird.

5. Vorrichtung nach Anspruch 4, dadurch gekennzeichnet, daß das Zeitintervall wenigstens gleich einer Sekunde ist.

6. Vorrichtung nach Anspruch 1, dadurch gekennzeichnet, daß der Netzstromdetektor (9) einen Satz aus zwei Optokupplern (22, 23) aufweist, deren Eingänge mit zwei Dioden (24, 25) verbunden sind, die antiparallel geschaltet sind, und deren Ausgänge parallel angeordnet sind, so daß von dem Strom in der Leitung unabhängig von dessen Richtung die Leitfähigkeit der einen oder anderen Diode hervorgerufen wird.

7. Vorrichtung nach Anspruch 6, dadurch gekennzeichnet, daß ein Kondensator (9a) parallel zu den Optokupplern geschaltet ist, um den Wert des Weckerstroms in den Dioden zu begrenzen und dabei gleichzeitig den Durchgang der Gesprächs- und Weckersignale zu ermöglichen, ohne sie zu schwächen.

8. Vorrichtung nach Anspruch 1, dadurch gekennzeichnet, daß der Spannungssteuerschalter (10) zwischen den beiden Leitungsdrähten eine Gleichrichterbrücke (31) aufweist, deren Eingangsspannung die Spannung der Leitung ist, wobei die Ausgangsspannung das Gate (43) eines Feldeffekttransistors (44) derart versorgt, daß bei einem Spannungsabfall in der Leitung die Spannung am Gate des Transistors abnimmt, wodurch dieser leitend gemacht wird, um die Eingangsdiode (48) eines Optokupplers (47) zu versorgen.

9. Vorrichtung nach Anspruch 1, dadurch gekennzeichnet, daß sie eine Schaltung (14) zur sofortigen Kontrolle von Unregelmäßigkeiten mit zwei NOR-Gliedern (52, 53) aufweist, die mit dem gemeinsamen Ausgang der Optokuppler (22, 23) des Leitungsstromdetektors (9) bzw. mit dem Ausgang des Optokupplers (47) des Spannungssteuerschalters (10) derart verbunden sind, daß bei Abwesenheit eines Stroms und Anwesenheit eines Spannungsabfalls ein Steuersignal erzeugt wird.

10. Vorrichtung nach Anspruch 9, dadurch gekennzeichnet, daß das von der Schaltung (14) zur sofortigen Kontrolle von Unregelmäßigkeiten abgegebene Signal von einer Aufzeichnungsschaltung (16) empfangen wird, die einen Zähler (63), der die festgestellten aufeinanderfolgenden Unregelmäßigkeiten inkrementiert, sowie eine Anzeigeeinrichtung (64) aufweist, die einer Kippschaltung (65), die die Speicherung der Anwesenheit wenigstens einer Unregelmäßigkeit ermöglicht, sowie einem Alarm zugeordnet sind, der im Falle von Wiederholungen der aufgezeichneten Unregelmäßigkeiten ausgelöst wird.

## Claims

1. Device for detecting a non-authorised connection on a subscriber telephone line, comprising a line current detector (9) and a voltage controller (10) connected between the two wires (2, 3) of the line and installed in a control and recording circuit (8) arranged in such a way that the simultaneous detection of an absence of current in the line and of a drop in voltage as a result of an anomaly, corresponding notably to a direct non-authorised connection with isolation in the line or parallel to the line, is immediately detected, characterised in that the device also comprises a delay circuit (14) in series with the control and recording circuit (8) such that the detected anomaly is only taken into account beyond a threshold of minimum duration.

2. Device according to claim 1, characterised in that the adjustable threshold is adjusted by means of a variable resistance (61) in series with a capacitor (62).

3. Device according to claim 2, characterised in that the duration of the threshold is fixed to 30 seconds.

4. Device according to any one of claims 1 to 3, characterised in that the control and recording circuit (8) is only likely to take account of the successive anomalies insofar as they are separated by at least one given interval of time adjusted by means of resistance (56) -capacitance (55).

5. Device according to claim 4, characterised in that the interval of time is equal to at least one second.

6. Device according to claim 1, characterised in that the line current detector (9) comprises a set of two optocouplers (22, 23) the inputs of which are joined to two diodes (24, 25) arranged in parallel with opposite polarities and the outputs of which are disposed in parallel such that the conduction of one or the other of these diodes is initiated by the current in the line whatever the direction thereof.

7. Device according to claim 6, characterised in that a capacitor (9a) is mounted in parallel on the optocouplers in order to limit the value of the ringing current in the diodes whilst permitting passage of conversation and ringing signals in the line without weakening them.

8. Device according to claim 1, characterised in that the voltage controller (10) between the two wires of the line comprises a bridge of rectifiers (31) the input voltage of which is the voltage of the line and the output voltage of which feeds the gate (43) of a field-effect transistor (44) such that if the voltage in the line drops the voltage to the gate of the transistor decreases making the latter conduct so as to drive the input diode (48) of an optocoupler (47).

9. Device according to claim 1, characterised in that there is provided a fast-acting control circuit (14), comprising two NOR gates (52, 53) joined respectively to the output of optocouplers (22, 23) of the line current detector (9) and to the output of an optocoupler (47) of the voltage controller (10) so as to produce a command signal in the absence of current and in the presence of a voltage drop.

10. Device according to claim 9, characterised in that the signal issued from the fast-acting control circuit (14) is received by a recording circuit (16), comprising a counter (63) incrementing the successive anomalies detected and a monitor (64) connected to a flip-flop (65) making it possible to memorise the presence of at least one anomaly and to an alarm activated if the recorded anomalies are repeated.
